# EUROPEAN PATENT APPLICATION

(11) **EP 4 755 266 A1**
(43) Date of publication of application: **10.06.2026**
(21) Application number: 24217381.3
(22) Date of filing: 04.12.2024
(51) Int. Cl.: A47J 27/00, A47J 43/044, A47J 43/07

(54) **KITCHEN MACHINE WITH HALOGEN LAMP**

(71) Applicant: BSH Hausgeräte GmbH, 81739 München (DE)
(72) Inventor: Orbanic, Henri, 1000 Ljubljana (SI); Brglez, Dejan, 1290 Grosuplje (SI); Koscak, Ales, 6230 Postojna (SI); Novakovic, Tadej, 3331 Nazarja (SI); Amon, Matej, 3332 Recica ob Savinji (SI); Hickl, Karin, 81377 München (DE); Reese, Maximiliane, 88471 Laupheim (DE)

(57) **Abstract**

A kitchen machine (100) is described, wherein the kitchen machine (100) comprises a base unit (103) for placing a receptacle (104), and a heating unit (106) which is configured to heat up a receptacle (104) that is placed on the base unit (103). The heating unit (106) comprises a halogen lamp (202) which is configured to generate infrared radiation for heating up the receptacle (104).

## Description

The present document relates to a kitchen machine which is configured to process a food item using a tool.

A kitchen machine is typically configured to process a food item which is placed within or above the receptacle of the kitchen machine using one or more (possibly interchangeable) tools. Example tools are a knife, a shredder, a dough hook, a slicing tool, a sausage maker, a pasta maker, etc. The kitchen machine may comprise a heating unit which is configured to heat up the receptacle, e.g., for warming up a dough when letting rise the dough.

The present document addresses the technical problem of increasing the comfort-of-use and/or the efficiency in the context of heating up the receptable of a kitchen machine. The technical problem is solved by the independent claim. Preferred examples are described in the dependent claims.

According to an aspect, a kitchen machine is described. The kitchen machine may be configured to process a food item which is placed within (into) or above the receptacle (e.g., the bowl) of the kitchen machine using a tool. The kitchen machine comprises a base unit for placing the receptacle. Furthermore, the kitchen machine comprises a heating unit which is configured to heat up the receptacle that is placed on the base unit. The heating unit may be configured to heat up the receptacle up to a temperature of 50°C or more. The maximum temperature of the receptacle, which may be achieved by the heating unit may be 100°C or less, or 90°C or less.

The heating unit comprises a halogen lamp which is configured to generate infrared, IR, in particular short-wave (SW) IR, radiation for heating up the receptacle. The heating unit, in particular the halogen lamp, is preferably located within the base unit such that the halogen lamp is configured to heat up the bottom of the receptacle that is placed on the base unit. By making use of a halogen lamp, an efficient and rapid, contactless, heating of the receptacle may be provided, thereby increasing the comfort-of-use of the kitchen machine.

The halogen lamp may be configured to emit radiation, which partially lies within the visible spectrum. As a result of this, a user of the kitchen machine may visually perceive that the receptacle of this kitchen machine is being heated up, thereby increasing the comfort-of-use of the kitchen appliance.

The kitchen machine may comprise a housing extension that extends upwards from the base unit. The housing extension may be configured to hold a tool from above into the receptacle that is placed on the base unit, such that the tool is configured to process a food item within the receptacle. The kitchen machine may comprise a motor which is configured to drive the tool for processing the food item within the receptacle. Hence, the kitchen machine may be configured to drive the tool from the top of the receptacle. As a result of this, the bottom of the receptacle does not comprise any coupling for the tool, such that a relatively large surface is available for heating up the receptacle. By doing this, a particularly efficient and rapid heating of the receptacle is provided.

The halogen lamp may have a circular and/or a horse shoe shape. Alternatively, or in addition, the halogen lamp may comprise a plurality of lamp elements, in particular straight lamp elements. The different lamp elements may e.g. be arranged to form a triangular or a rectangular shaped halogen lamp. As a result of this, a relatively large fraction of the bottom of the receptacle may be covered, thereby providing a particularly efficient and rapid heating of the receptacle.

The heating unit may comprise a reflector which is configured to redirect (reflect) IR radiation that has been generated and/or emitted by the halogen lamp into the upwards direction towards the bottom of the receptacle that is placed on the base unit. The reflector may comprise a bottom reflective surface which is configured to redirect IR radiation that has been emitted in the downward direction (which is opposite to the upward direction). Alternatively, or in addition, the reflector may comprise a side reflective surface which is configured to redirect IR radiation that has been emitted in the sideways direction (which is perpendicular to the downward direction and the upward direction). The side reflective surface may be arranged around the halogen lamp.

The reflector may comprise a quartz tube within which the halogen lamp is located, wherein the quartz tube is partially coated with a reflective coating (at the bottom and/or at the sides). Alternatively, or in addition, the reflector may comprise a cup having a bottom wall and a side wall, wherein the halogen lamp is located within the cup, and wherein the bottom wall and/or the side wall form a reflective surface.

By making use of a reflector within the heating unit, a particularly efficient and rapid heating of the receptacle is provided.

The heating unit may comprise a cover which is located between the bottom of the receptacle that is placed on the base unit and the halogen lamp and which is configured to protect the halogen lamp from a mechanical impact and/or from soiling. The cover is preferably substantially transparent with regards to the IR radiation emitted by the halogen lamp. In particular, the cover may be made of glass, e.g., quartz glass. By making use of a cover within the heating unit, a particularly robust heating of the receptacle may be provided.

The heating unit may comprise a temperature sensor which is configured to sense the temperature at the bottom of the receptacle that is placed on the base unit. The temperature sensor is preferably at least partially shielded from the IR radiation of the halogen lamp using one or more reflective surfaces, in particular one or more reflective surfaces of the housing of the temperature sensor and/or of the reflector of the heating unit. A control unit of the kitchen machine may be configured to operate the heating unit, in particular the halogen lamp, in dependence of the measurement values of the temperature sensor, e.g. in order to set, in particular to regulate, the temperature at the bottom of the receptacle to a target value. As a result of this, a particularly precise heating of the receptacle may be provided.

The sensing element of the temperature sensor is preferably located at the centre of the bottom of the receptacle that is placed on the base unit. Alternatively, or in addition, the temperature sensor may be located at the centre of the halogen lamp, at the centre of the reflector of the heating unit and/or at the centre of the cover for covering the halogen lamp. By doing this, the temperature of the receptacle may be captured (sensed) in a particularly precise and robust manner.

The bottom of the receptacle comprises an outer surface facing the base unit. The outer surface of the bottom of the receptacle may have an emissivity value with regards to the IR radiation that is emitted by the halogen lamp, which is equal to or greater than 0,9, in particular equal to or greater than 0,95. For this purpose, the outer surface of the bottom of the receptacle may comprise a paint layer, a coating, a chemically etched layer, a sandblasted layer and/or a laser marked layer configured to increase the emissivity value of the outer surface of the bottom of the receptacle. Alternatively, or in addition, the receptacle may be made of glass. As a result of this, a particularly efficient and rapid heating of the receptacle is provided.

The kitchen machine, in particular the base unit of the kitchen machine, may comprise a blower (fan) which is configured to generate an air flow for cooling the halogen lamp and/or one or more components in the vicinity of the halogen lamp. The blower may be configured to generate an air flow which passes by the halogen lamp and/or the one or more components in the vicinity of the halogen lamp (such as the reflector), and/or transfers thermal energy from the halogen lamp and/or the one or more components in the vicinity of the halogen lamp towards the bottom of the receptacle. By making use of an air blower, a particularly efficient, robust and rapid heating of the receptacle is provided.

According to a further aspect, the use of a halogen lamp for heating up the receptacle of a kitchen machine is described.

It should be noted that the methods and systems including its preferred embodiments as outlined in the present document may be used stand-alone or in combination with the other methods and systems disclosed in this document. In addition, the features outlined in the context of a system are also applicable to a corresponding method. Furthermore, all aspects of the methods and systems outlined in the present document may be arbitrarily combined. In particular, the features of the claims may be combined with one another in an arbitrary manner.

The invention is explained below in an exemplary manner with reference to the accompanying drawings, wherein
Figure 1a shows a block diagram of a kitchen machine;
Figure 1b shows a perspective view of a kitchen machine;
Figure 2a shows a sectional view of a kitchen machine which comprises a halogen lamp at a heating element for heating up the receptacle of the kitchen machine; and
Figure 2b shows an exploded drawing of a heating element comprising a halogen lamp.

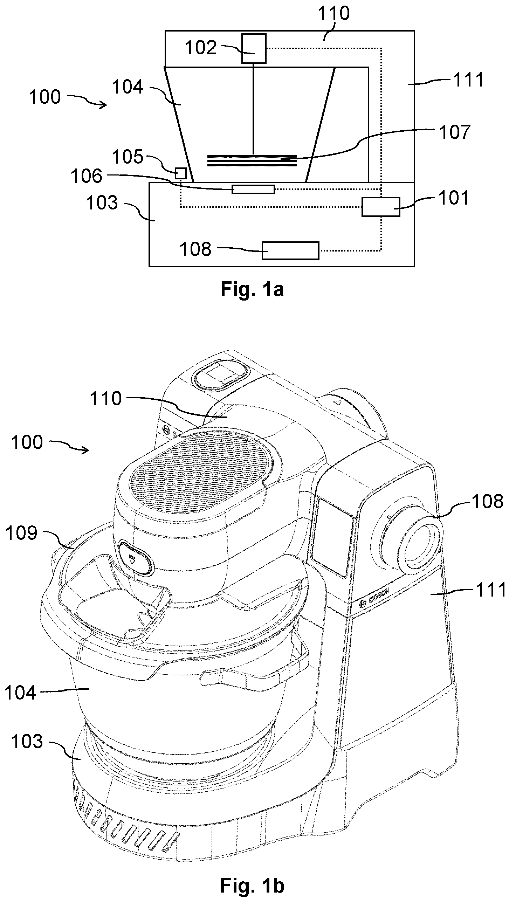

As outlined above, the present document is directed at increasing the comfort-of-use and/or the efficiency with regards to heating up the receptacle of a kitchen machine. In this context, Fig. 1a shows a block diagram of an example kitchen machine 100 which comprises a base unit 103 on which a receptacle 104, in particular a bowl, is placed. The receptacle 104 may be configured to be covered by a lid 109 (as shown in Fig. 1b). The kitchen machine 100 comprises an electric motor 102 which is configured to drive a tool 107 that is located within the receptacle 104. The tool 107 may be detachable and/or exchangeable. In particular, the kitchen machine 100 may be configured to be used with an arbitrary tool 107 out of a pre-determined set of different tools 107, wherein the set of tools 107 may comprise a knife, a shredder, a dough hook, a slicing tool, a sausage maker and/or a pasta maker.

In the example shown in Fig. 1a, the kitchen machine 100, in particular the housing of the kitchen machine 100, comprises an L-shaped extension 110, 111 which extends upwards from the base unit 103. The extension 110, 111 comprises a vertical section 111 which extends vertically away from the base unit 103 and a horizontal section 110 which extends horizontally away from the vertical section 111 of the extension 110, 111, such that the horizontal section 110 is at least partially located above the receptacle 104 which is placed on the base unit 103. The tool 107 may be driven via the extension 110, 111. For this purpose, the extension 110, 111, in particular the horizontal section 110 of the extension 110, 111, may comprise a coupling member for attaching and/or coupling the tool 107. The motor 102 for driving the tool 107 may be located within the extension 110, 111. When driving the tool 107 at the top of (above) the receptacle 104, the bottom of the receptacle 104 typically does not comprise any coupling member for the tool 107, thereby increasing the quality with which food items can be processed within the receptacle 104.

The kitchen machine 100 may comprise a heating unit 106 (which may be integrated within the receptacle 104) for heating the receptacle 104, e.g., for allowing a food item to be warmed up within the receptacle 104. Furthermore, the kitchen machine 100 may comprise a temperature sensor 105 which is configured to provide measurement values regarding the temperature of the receptacle 104 and/or of the food item within the receptacle 104. In addition, the kitchen machine 100 may comprise a user interface 108 which allows a user to interact with the kitchen machine 100, e.g., for activating or for deactivating the motor 102 and for regulating the temperature of the receptacle 104, more specifically the food item to be processed. A control unit 101 of the kitchen machine 100 may be configured to operate the kitchen machine 100, in particular the motor 102 and/or the heating unit 106, in dependence of a user input received via the user interface 108 (of the kitchen machine 100 or of a remote device). The user interface 108 may comprise one or more input elements, such as a knob, and/or a display for displaying information to the user of the kitchen machine 100.

Fig. 1b shows a respective view of an example kitchen machine 100. The kitchen machine 100 shown in Fig. 1b comprises a knob as an input element of the user interface 108 of the kitchen machine 100.

The kitchen machine 100 may comprise a resistive heating unit 106 which typically requires the receptacle 104 to be in contact with the heating unit 106 as the heat to the receptacle 104 is mainly transferred through heat conductivity. In order to provide a relatively high heat conductivity, the receptacle 104 may comprise an aluminum block at the bottom of the receptacle 104, which leads to an increased weight of the receptacle 104 and which leads to a relatively slow heat up process due to the increased thermal mass of the receptacle 104.

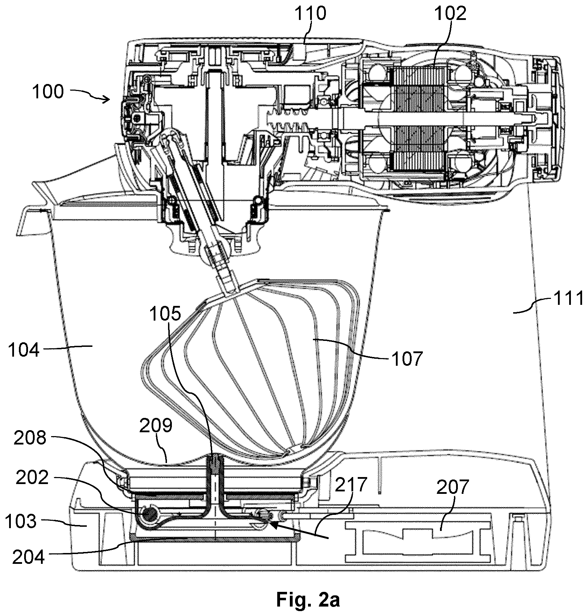

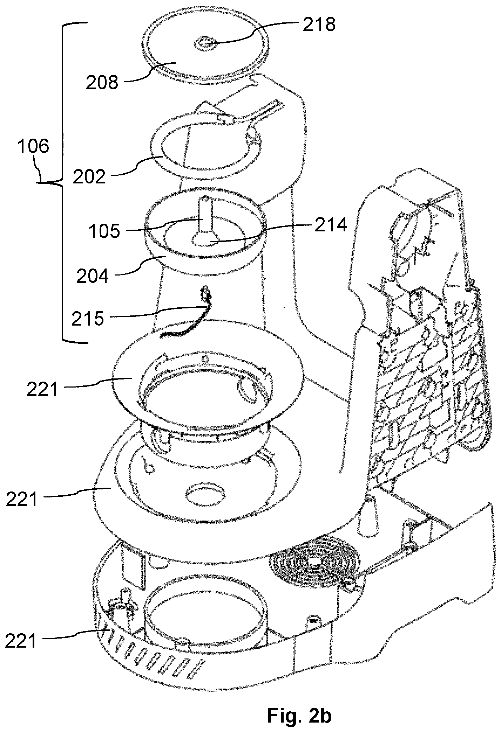

In the present document a kitchen machine 100 is described, which makes use of a heating unit 106 that comprises a halogen lamp for generating thermal energy. Fig. 2a shows a sectional view of a kitchen machine 100 which comprises a halogen lamp 202 within the base unit 103. Furthermore, Fig. 2b shows an exploded view of different components of a heating unit 106 with the halogen lamp 202. The halogen lamp 202 preferably has a circular and/or horse shoe shape, in order to enable a homogeneous provision of thermal energy at the bottom 209 of the receptacle 104. The temperature sensor 105 for sensing the temperature of the receptacle 104 may be located at the centre of the circular and/or horse shoe shaped halogen lamp 202. Furthermore, the temperature sensor 105 may be arranged in direct contact with the bottom 209 of the receptacle 104, in order to provide precise measurement values of the temperature of the receptacle 104.

The halogen lamp 202 may be placed within a reflector 204 which is configured to direct the thermal energy that is generated by the halogen lamp 202 towards the bottom 209 of the receptacle 104. The reflector 204 may have the shape of a circular cup which is open at the top. The halogen lamp 202 may be placed within the circular cup, thereby causing the thermal energy to be directed upwards through the opening at the top of the cup towards the bottom 209 of the receptacle 104. As a result of this, a particularly fast heat up process of the receptacle 104 may be achieved.

The kitchen machine 100, in particular the heating unit 106 of the kitchen machine 100, may comprise a protective cover 208 which is located above the halogen lamp 202. The cover 208 may be configured to cover the (cup-shaped) reflector 204 within which the halogen lamp 202 is located. The cover 208 may be made of a material having a relatively high heat conductivity, such as glass. By providing a cover 208 which is arranged between the bottom 209 of the receptacle 104 and the halogen lamp 202, the halogen lamp 202 may be protected with regards to mechanical damage and/or with regards to soiling.

The cover 208 may comprise a hole 218 for the temperature sensor 105. As illustrated in Figs. 2a and 2b, the temperature sensor 105 may have a stick-like shape which extends in the vertical direction away from the base unit 103 towards the bottom 209 of the receptacle 104. The temperature sensor 105 may pass through a hole 214 within the bottom of the reflector 204 and through the hole 218 of the cover 208, thereby providing an efficient and stable holding mechanism for the temperature sensor 105, and thereby enabling the temperature sensor 105 to sense the temperature directly at the centre of the bottom 209 of the receptacle 104. The temperature sensor 105 may be coupled to the control unit 101 of the kitchen machine 100 via a cable 215, wherein the cable 215 is preferably located below the bottom of the reflector 204, such that the cable 215 is shielded from the thermal energy that is generated by the halogen lamp 202.

The kitchen machine 100 may comprise an air blower 207 which is configured to generate an air flow 217 for cooling one or more components 202, 204, 208 of the heating unit 106.

The air flow 217 may be directed towards the bottom 209 of the receptacle 104, in order to further accelerate the heat-up process of the receptacle 104. The air blower 207 may be located within the base unit 103 of the kitchen machine 100. The air flow 217 which is generated by the air blower 207 preferably passes by one of more components 202, 204, 208 of the heating unit 106, in order to protect the one or more components 202, 204, 208 of the heating unit 106 from overheating.

Fig. 2b shows different housing elements 221 of the housing of the kitchen machine 100, in particular a housing element 221 of the base unit 103 which is covered by a further housing element 221 which forms a part of the extension 110, 111. In addition, the housing may comprise a housing element 221 for taking up the heating unit 106 of the kitchen machine 100.

Hence, a kitchen machine 100 with a heating unit 106 is described, wherein the heating unit 106 resides in the bottom part, i.e. in the base unit 103, of the housing of the kitchen machine 100. The heating unit 106 comprises a halogen lamp 202 which is configured to heat up the receptacle 104, in particular the bowl, wherein typically only the bottom part 209 of the receptacle 104 is heated up by the infrared (IR) light or radiation which is generated by the halogen lamp 202. The lamp 202 may be configured to heat up the entire surface of the bottom 209 of the receptacle 104, e.g., by providing a lamp 202 with a horse shoe and/or circular shape. The halogen lamp 202 may operate in the short-wave IR, i.e. SWIR, spectrum, which is beneficial for a relatively fast heat-up process.

The surface of the bottom 209 of the receptacle 104 is preferably such that its emissivity is as close as possible to that of the black body and/or such that its emissivity value is close to 1 for the radiative spectrum of the halogen lamp 202. This can be achieved by painting, by coating, by chemical etching, by sandblasting and/or by laser marking of the outer surface of the bottom 209 of the receptacle 104.

To further increase the efficiency of the halogen lamp 202, a reflector 204 with one or more reflective surfaces may be used, to collect emitted IR radiation and to redirect it towards the bottom 209 of the receptacle 104. The reflector 104 may be made of metal with a shiny or mirrored or polished surface. The reflector 104 may e.g. be made of aluminum, sheet metal steel, chrome plated plastic or another metal material. The one or more reflective surfaces of the reflector 104 preferably behave as a collecting mirror which is configured to collect the emitted IR radiation and to direct the collected radiation towards the bottom 209 of the receptacle 104. Alternatively, or in addition, the halogen lamp 202 may be located inside of a quartz tube which is partially coated with a reflective coating (e.g. gold), thereby providing a spatial distribution of the IR radiation, which is directed towards the bottom 209 of the receptacle 104.

The thermal regulation of the heating unit 106 may be performed based on the measurement values captured by a temperature sensor 105, wherein the temperature sensor 105 may be a contact-based sensor or a contactless sensor. The temperature sensor 105 may be located in the centre of the halogen lamp 202. The point of measurement of the temperature sensor 105 may be located at the centre of the surface of the bottom 209 of the receptacle 104. The temperature sensor 105 may be protected from the IR radiation of the halogen lamp 202 using a reflective surface, thereby increasing the accuracy of the temperature measurement. The reflective surface may be provided by the housing of the temperature sensor 105 and/or by the reflector 204.

The halogen lamp 202 may be protected from mechanical damage and/or from potential food spilling by a glass cover 208 which is positioned between the halogen lamp 202 and the bottom 209 of the receptacle 104. The thickness of the cover 208 may be between 2 mm and 5 mm, e.g. 3 mm. The cover 208 is preferably (fully) transparent to the SWIR radiation of the halogen lamp 202 and preferably withstands relatively high thermal loads. The cover 208 may be made of quartz glass.

The halogen lamp 202 may be enclosed between the reflector 204 and the glass cover 208. This may lead to the air around the halogen lamp 202 heating up significantly, which may cause overheating of the halogen lamp 202 and/or of one or more surrounding components 204, 208. A blower 207 may be provided to generate an air flow 217 for cooling the halogen lamp 202 and/or the one or more surrounding components 204, 208 of the halogen lamp 202. The blower 207 may be integrated within the housing of the kitchen machine 100.

The use of a heating unit 106 with a halogen lamp 202 enables an efficient and reliable, contactless, heating of the receptacle 104 of the kitchen machine 100. A transparent receptacle 104, e.g. made of glass, may be used to enable the user to better supervise the processing of the food item which is placed within the receptacle 104. By making use of a halogen lamp 202 a particularly fast heat-up process may be achieved. Furthermore, the weight of the receptacle 104 may be decreased. In addition, a relatively fast cool down of the receptacle 104 after usage may be achieved. The radiation of the halogen lamp 202 may at least partially lie within the visible spectrum, thereby allowing the user to optically perceive the fact that the receptacle 104 is being heated and/or is hot.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. A kitchen machine (100), wherein
- the kitchen machine (100) comprises a base unit (103) for placing a receptacle (104);
- the kitchen machine (100) comprises a heating unit (106) which is configured to heat up the receptacle (104) that is placed on the base unit (103); and
- the heating unit (106) comprises a halogen lamp (202) which is configured to generate infrared, IR, in particular short-wave IR, radiation for heating up the receptacle (104).

2. The kitchen machine (100) of claim 1, wherein
- the kitchen machine (100) comprises a housing extension (110, 111) that extends upwards from the base unit (103);
- the housing extension (110, 111) is configured to hold a tool (107) from above into the receptacle (104) that is placed on the base unit (103), such that the tool (107) is configured to process a food item within the receptacle (104); and
- the kitchen machine (100) comprises a motor (102) which is configured to drive the tool (107) for processing the food item within the receptacle (104).

3. The kitchen machine (100) of any previous claims, wherein the heating unit (106) is located within the base unit (103) such that the halogen lamp (202) is configured to heat up a bottom (209) of the receptacle (104) that is placed on the base unit (103).

4. The kitchen machine (100) of claim 3, wherein
- the halogen lamp (202) has a circular and/or a horse shoe shape; or
- the halogen lamp (202) comprises a plurality of lamp elements, in particular straight lamp elements, which are arranged to form a triangular or a rectangular shaped halogen lamp (202).

5. The kitchen machine (100) of any of claims 3 to 4, wherein the heating unit (106) comprises a reflector (104) which is configured to redirect IR radiation that has been generated by the halogen lamp (202) into an upward direction towards the bottom (209) of the receptacle (104) that is placed on the base unit (103).

6. The kitchen machine (100) of claim 5, wherein the reflector (104) comprises
- a bottom reflective surface which is configured to redirect IR radiation that has been emitted in a downward direction opposite to the upward direction; and/or
- a side reflective surface which is configured to redirect IR radiation that has been emitted in a sideways direction which is perpendicular to the downward direction and the upward direction.

7. The kitchen machine (100) of any of claims 5 to 6, wherein the reflector (104) comprises
- a quartz tube within which the halogen lamp (202) is located; wherein the quartz tube is partially coated with a reflective coating; and/or
- a cup having a bottom wall and a side wall; wherein the halogen lamp (202) is located within the cup; wherein the bottom wall and/or the side wall form a reflective surface.

8. The kitchen machine (100) of any of claims 3 to 7, wherein the heating unit (106) comprises a cover (208) which is located between the bottom (209) of the receptacle (104) that is placed on the base unit (103) and the halogen lamp (202) and which is configured to protect the halogen lamp (202) from a mechanical impact and/or from soiling.

9. The kitchen machine (100) of claim 8, wherein
- the cover (208) is substantially transparent with regards to the IR radiation emitted by the halogen lamp (202); and/or
- the cover (208) is made of glass, in particular quartz glass.

10. The kitchen machine (100) of any of claims 3 to 9, wherein
- the heating unit (106) comprises a temperature sensor (105) which is configured to sense a temperature at the bottom (209) of the receptacle (104) that is placed on the base unit (103); and
- the temperature sensor (105) is at least partially shielded from the IR radiation of the halogen lamp (202) using one or more reflective surfaces, in particular one or more reflective surfaces of a housing of the temperature sensor (105) and/or of a reflector (104) of the heating unit (106).

11. The kitchen machine (100) of claim 10, wherein
- a sensing element of the temperature sensor (105) is located at a centre of the bottom (209) of the receptacle (104) that is placed on the base unit (103); and/or
- the temperature sensor (105) is located at a centre of the halogen lamp (202), of a reflector (104) of the heating unit (106) and/or of a cover (208) for covering the halogen lamp (202).

12. The kitchen machine (100) of any of claims 3 to 11, wherein
- the kitchen machine (100) comprises the receptacle (104);
- the bottom (209) of the receptacle (104) comprises an outer surface facing the base unit (103); and
- the outer surface of the bottom (209) of the receptacle (104) has an emissivity value with regards to the IR radiation that is emitted by the halogen lamp (202), which is equal to or greater than 0,9, in particular equal to or greater than 0,95.

13. The kitchen machine (100) of claim 12, wherein
- the outer surface of the bottom (209) of the receptacle (104) comprises a paint layer, a coating, a chemically etched layer, a sandblasted layer and/or a laser marked layer configured to increase the emissivity value of the outer surface of the bottom (209) of the receptacle (104); and/or
- the receptacle (104) is made of glass.

14. The kitchen machine (100) of any of claims 3 to 13, wherein the kitchen machine (100), in particular the base unit (103) of the kitchen machine (100), comprises a blower (207) which is configured to generate an air flow (217) for cooling the halogen lamp (202) and/or one or more components (204, 208) in the vicinity of the halogen lamp (202).

15. The kitchen machine (100) of claim 14, wherein the blower (207) is configured to generate an air flow (217) which
- passes by the halogen lamp (202) and/or the one or more components (204, 208) in the vicinity of the halogen lamp (202); and/or
- transfers thermal energy from the halogen lamp (202) and/or the one or more components (204, 208) in the vicinity of the halogen lamp (202) towards the bottom (209) of the receptacle (104).
